# EUROPEAN PATENT APPLICATION

(11) **EP 4 366 232 A1**
(43) Date of publication of application: **08.05.2024**
(21) Application number: 22306658.0
(22) Date of filing: 03.11.2022
(51) Int. Cl.: H04L 9/30, H04L 9/32, H04L 9/00

(54) **SECURE AND FAST BIT UNPACKING FOR DILITHIUM**

(71) Applicant: CryptoNext SAS, 75005 Paris (FR)
(72) Inventor: Faugère, Jean-Charles, 75005 Paris (FR); Adomnicai, Alexandre, 75005 Paris (FR)
(74) Representative: Wlodarczyk, Lukasz Georges Kazimierz

(57) **Abstract**

The disclosure relates to a cryptographic device and to a method to improve the security of the cryptographic device while minimizing the deceleration of the cryptographic device due to improving the security of the cryptographic device. The cryptographic device comprises at least one electronic chip to carry out a Dilithium operation involving a vector y of polynomials yi with coefficients y_{i,j}. The method comprises the cryptographic device generating the vector y from a random seed and unpacking the vector y from a bit string. The method further comprises the cryptographic device reusing the random seed to randomly shuffle the unpacking of the vector y, thereby further securing the Dilithium operation while sparing a random number generation.

## Description

The disclosure relates to post quantum cryptography, more specifically to the Dilithium scheme which has been selected by the NIST in 2022 as one of the possible schemes to address the quantum computing threat.

Asymmetric cryptography (a.k.a. public key cryptography) was invented in the 1970s. It consists in replacing (or complementing) traditional secret keys by key pairs composed of a public key and a private key. Each entity keeps its private key for itself, which avoids sharing it with anybody else. The public key, however, can be shared with anybody. This is a great advantage over secret key cryptography. Indeed, sharing a secret key with another entity means that each entity needs to have a different secret key for every other entity with which it intends to communicate. Failing to do so would mean that multiple entities could decrypt confidential data sent to only one of them (due to the same secret key being shared), which is not safe. This in turns may lead to severe key management issues (due to the number of secret keys involved to avoid this difficulty). By contrast, with asymmetric cryptography each entity may only need as little as one key pair (several key pairs may be needed sometimes, for reasons that are not immediately relevant to the present disclosure). A public key can "undo" what a corresponding private key has "done", and vice versa. So, for example, a given entity can sign a document by applying its private key to it. No other entity can do that, by lack of access to the private key. But any entity can verify that the signature is correct, by checking it with the public key of the entity that pretends to have signed (as this public key is publicly available). Conversely, an entity can share a secret (e.g. a secret key) with a recipient by applying the public key of the recipient to the secret. Only the recipient can then extract the secret, by applying its private key.

The most widespread public key cryptography solution is called RSA. RSA is used to encrypt email communications, to secure transactions on web sites (bank transactions, etc.), to authenticate to third parties, etc. The security of RSA is based on the assumption that it is hard to factor the product of large prime numbers. This has never been proven, but nobody ever managed to solve this problem, at least publicly, within reasonable time and cost, and for reasonably sized prime numbers.

For approximately 25 years, there has been intense research in the field of quantum computing. The advent of quantum computing is still not certain. The date when a first usable quantum computer could become available is even less certain. However, it is more and more likely that quantum computer could become a reality in the near future.

Quantum computing is expected to be able to easily factor the product of large prime numbers. Currently deployed (pre-quantum) solutions used to secure the Internet or offline activities would not resist.

It has therefore become urgent to design new cryptographic schemes that would resist quantum computing. Dilithium is one of them and was selected by the NIST in July 2022 after a selection process that had started back in 2016.

Dilithium provides a digital signature scheme, i.e. a tool for an entity to certify data to be sent to a recipient and to let the recipient verify that said data were not altered and were indeed certified (signed) by the entity.

A digital signature scheme is a collection of three tools :
1. A key generation tool, Generate, which generates a public (verification) key and a private (signing) key;
2. A signing tool, Sign, which takes the private signing key, a message, and outputs a signature of the message;
3. A verification tool, Verify, which takes the public (verification) key, the signature and the message, and outputs a value stating whether the signature is valid or not.

In the context of signature schemes, attackers are interested in Sign and Generate tools to recover the private key (Verify manipulates the public key only).

In Dilithium, the public key consists of a matrix (which is typically referred to as "A") and a vector (which is typically referred to as "t"). The private key is formed with two vectors (typically referred to as "s₁" and "s₂").

The public and private keys are linked by the formula t = A s₁ + s₂. Quantum computers cannot retrieve s₁ and s₂ from A and t (this is called the MLWE problem, which quantum computers can't solve).

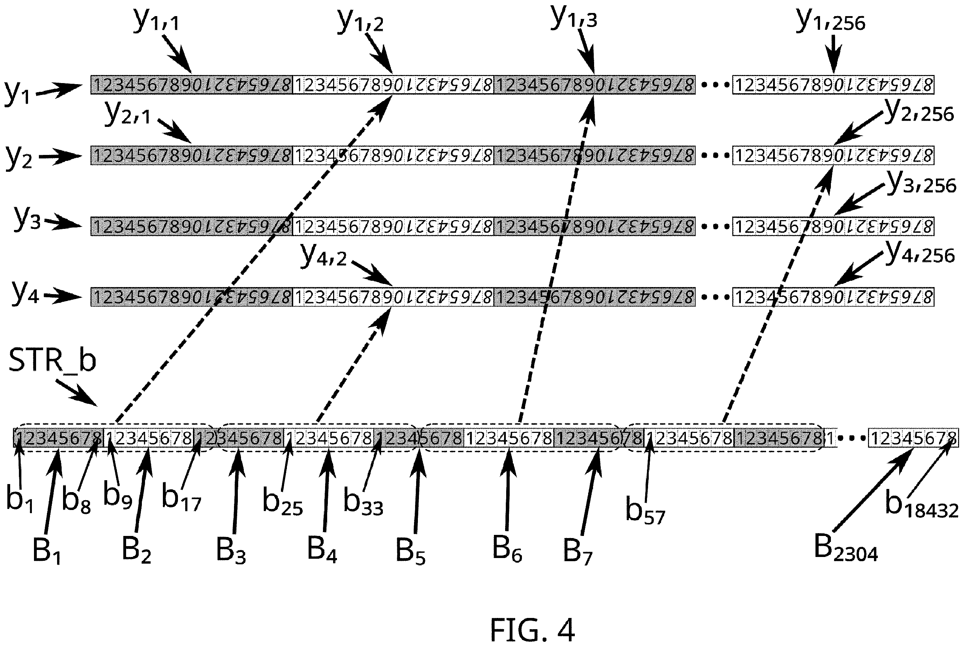

The specification of Dilithium *(*CRYSTALS-Dilithium, Algorithm Specifications and Supporting Documentation, Shi Bai, Léo Ducas, Eike Kiltz, Tancrède Lepoint, Vadim Lyubashevsky, Peter Schwabe, Gregor Seiler and Damien Stehl6, October 1, 2020) provides the following pseudocode for the Sign and Generate tools (image extracted from Figure 4, page 13):
Gen 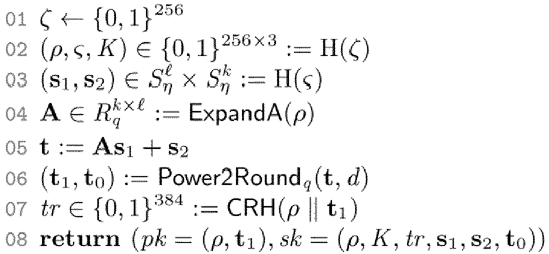
Sign(*sk*, *M)*

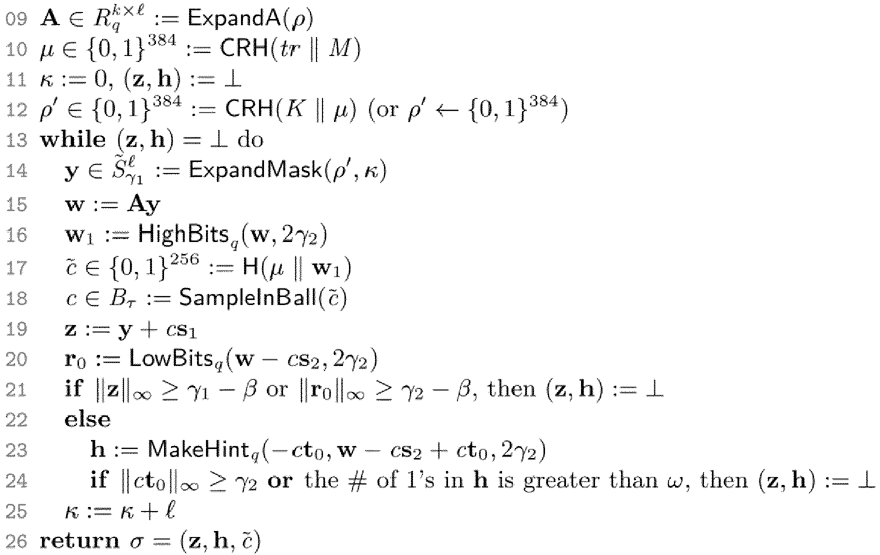

The key pair generation works as follows:
Line 01: generation of a 256-bit random number (parameter *ζ*).
Line 02: pseudorandom generation of three 256-bit parameters (*ρ*, 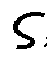 *, K)* by using a function H, which is a hash function fed with the 256-bit random number ζ of line 01 as a seed. H is in fact the SHAKE-256 function, which can generate an arbitrarily long output. SHAKE-256 must be fed with a random seed to not produce the same pseudorandom sequence each time it is called.
Line 03: pseudorandom generation of the private key (vectors s₁ and s₂), again with the SHAKE-256 function operated on parameter 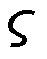 (2^{nd} parameter generated in line 02).
Line 04: the matrix A is generated by expanding parameter *ρ* (1^{st} parameter generated in line 02). The matrix A is only needed for multiplication. Hence, for the sake of faster implementations, the expansion function ExpandA does not output the actual matrix but the NTT domain representation Â of A. NTT (acronym for Number-theoretic transform) is a discrete Fourier transform for finite fields useful to optimize multiplications.
Line 05: compute t = A s₁ + s₂ (advantageously, A s₁ is computed with the equivalent but faster formula A s₁ = NTT⁻¹(Â NTT(s₁))).
Line 06: again for optimization purposes, t is decomposed in high order part t₁ and low order part (formed of d bits) to, i.e. t = t₁ 2^{d} + to. Parameter t₁ is used as the public key instead of using t. Line 06 computes to and t₁.
Line 07: this line generates 384 pseudorandom bits (parameter *tr*) with function CRH (a **c**ollision **r**esistant **h**ash function - for this purpose 384 bits of the output of SHAKE-256 are used).
Line 08: finally, optimized versions of the public and private keys are output.

The signature works as follows (there are two possible implementations, deterministic or randomized):
Line 09: as in line 04 of the key generation, the matrix A is "restored" (it's like a decompression) by expanding parameter *ρ* (which is much more compact). As in line 04 and for the same reasons, the expansion function ExpandA advantageously does not output the actual matrix but the NTT domain representation Â of A.
Line 10: this line generates 384 pseudorandom bits (parameter *µ*) with function CRH (see line 07 above).
Line 11 initializes parameters *κ* and (*z, h*) with constant values.
Line 12 generates 384 bits (parameter *ρ'*). In the deterministic implementation, generate them as pseudorandom bits with function CRH (see line 07 above). In the randomized implementation, draw a random number with a random number generator. The difference is: the deterministic implementation will always output the same 384 bits for a given key and message to be signed, while the randomized implementation will output different values each time. As a consequence, the same message will not have the same signature when signed several times with the randomized implementation.
Line 13 starts a loop for computing the signature. Indeed, the signature computation does not necessarily succeed immediately. It has to be repeated so long as it is not satisfactory, as will be seen. At that stage, an optimized implementation would precompute ŝ₁ = NTT(s₁), ŝ₂ = NTT(s₂), and t̂₀ = NTT(to).
Line 14 generates pseudorandom vector y based in particular on pseudorandom parameter *ρ'* (see line 12). The function ExpandMask computes each of the I coefficients of y, which are polynomials, independently. For the i^{th} polynomial, 0≤i≤l, it absorbs the 48 bytes of ρ' concatenated with the 2 bytes representing κ+i in little endian byte order into SHAKE-256.
Line 15 computes w = A y. This can be optimized by computing, instead of the naive A y, w = NTT⁻¹(Â NTT(y)).
Line 16 takes advantage of the fact that w can be written in a canonical way as w = w₁ 2γ₂ + wo where |w₀| ≤ γ₂. Accordingly, it prepares for optimizing computations with w by computing w₁.
Lines 17 computes 256-bit pseudorandom value *c̃* with function H (SHAKE-256).
Line 18: compute c from *c̃* with the SampleInBall routine, which absorbs the 32 bytes of *c̃* into SHAKE-256. Throughout its operations this routine squeezes SHAKE-256 in order to obtain a stream of random bytes of variable length. The first *τ* bits in the first 8 bytes of this random stream are interpreted as *τ* random sign bits *sᵢ* ∈ {0, 1}, i = 0, ..., *r* - 1. The remaining 64 - *τ* bits are discarded. For optimization purposes, c can be stored in NTT representation as ĉ = NTT(c).
Line 19: compute the tentative signature component z = y + c s₁. For optimization purposes, compute c s₁ as NTT⁻¹(ĉ ŝ₁).
Line 20: compute parameter ro which is used to assess whether the tentative signature component z (former line) is safe or whether it needs to be recalculated. N.B. this computation of ro involves c s₂, but for optimization purposes, c s₂ can be computed as NTT⁻¹(ĉ s₂).
Line 21: check if the signature component z is unsafe. If so, set the proper parameters to continue looping until a proper signature is calculated.
Line 22: if the signature component z is potentially safe, jump to next lines to carry out further tests.
Line 23: compute a value h that may be indicative of the fact that the signature component z is unsafe. N.B. this computation of h involves c t₀, but for optimization purposes, c to can be computed as NTT⁻¹(ĉ to).
Line 24: check whether in view of c to and h, the signature is unsafe. If so, set the proper parameters to continue looping until a proper signature is calculated.
Line 25: increment κ in case it is needed for looping further in view of obtaining a better signature.
Line 26: this line is reached only after looping is over and a proper signature component z has been obtained. Line 26 returns the signature.

The above can be simplified as follows. To sign a message with private key s₁, s₂:
1. Sample y as a random vector of polynomials with uniform coefficients;
2. Compute c = H(message, A y) where H is a hash function and A is part of the public key;
3. Compute z = y + c s₁;
4. If z has coefficients in a small interval, then go back to step 1 (rejection sampling);
5. Return the signature σ = (z, c).

A signature scheme that is theoretically secure can still be defeated when implemented in the real world. Indeed, physical phenomena on the computing platform implementing the signature scheme can lead to side-channel leakages (e.g. execution timing, power consumption, electromagnetic emanations) that can disclose information about the data being manipulated.

Dilithium is supposed to be protectable against timing attacks. But it is still vulnerable to power or electromagnetic leakage.

A Differential Power Analysis (DPA) attack could target the intermediate product c s₁ to recover the private key. The conversion of s₁ into the NTT domain for efficient polynomial multiplication c s₁ also constitutes an attack path. However, countermeasures have already been proposed against the above.

More recently, a new attack against Dilithium has been published (Soundes Marzougui et al., Profiling Side-Channel Attacks on Dilithium: A Small Bit-Fiddling Leak Breaks It All, Cryptology ePrint Archive, Report 2022/106. 2022). It consists in identifying some null coefficients in vector y. Vector y is used to build the signature component z = y + c s₁. When the i^{th} coefficient yᵢ = 0, we have zᵢ = (c s₁)ᵢ, which gives a linear relation on the corresponding coefficient of s₁. A linear system involving the private key s₁ can then be solved, if the number of equations is sufficient.

In Dilithium 2, polynomial coefficients in y are defined on w=18 bits (w=20 bits for Dilithium 3/5). In this case, a coefficient is null with a probability of 1/2¹⁸. There are 256 coefficients per polynomial and L=4 polynomials in y. Since y has to be picked randomly, the implementer typically randomly generates 18*256*4 bits and then has to unpack this random string into 256 4 coefficients of 18 bits each. Unfortunately, if one handles each polynomial sequentially (from 1 to 4) and each coefficient sequentially (from 1 to 256), as is the case by default, an attack is possible.

In other words, while Dilithium is mathematically secure (to the best of the current knowledge), real implementations of Dilithium can be targeted for example by side channel attacks. Leveling Dilithium against Leakage, Revisited Sensitivity Analysis and Improved Implementations, Melissa Azouaoui, Olivier Bronchain, Gaëtan Cassiers, Clément Hoffmann, Yulia Kuzovkova, Joost Renes, Tobias Schneider, Markus Schönauer, François-Xavier Standaert and Christine van Vredendaa, Cryptology ePrint Archive, 23 october 2022, analyzes weaknesses in intermediate computations of Dilithium and ways to overcome them.

However, implementing countermeasures against side channel attacks can consume resources and not only complexify the design of the scheme but also lead to slowing down the signing tool substantially, which is a problem.

The invention aims at improving the situation.

According to one aspect of the invention, a method is proposed to improve the security of a cryptographic device while minimizing the deceleration of the cryptographic device due to improving the security of the cryptographic device. The cryptographic device comprises at least one electronic chip to carry out a Dilithium operation involving a vector y of polynomials yᵢ with coefficients y_{i,j}. The method comprises the cryptographic device generating the vector y from a random seed and unpacking the vector y from a bit string. The method further comprises the cryptographic device reusing the random seed to randomly shuffle the unpacking of the vector y. This is advantageous as it further secures the Dilithium operation while sparing a random number generation.

According to another aspect of the invention, a cryptographic device comprises at least one electronic chip to carry out a Dilithium operation involving a vector y of polynomials yᵢ with coefficients y_{i,j}. The cryptographic device is arranged to generate the vector y from a random seed and to unpack the vector y from a bit string. The cryptographic device is further arranged to reuse the random seed to randomly shuffle the unpacking of the vector y. This is advantageous as it further secures the Dilithium operation while sparing a random number generation.

Other aspects, purposes and advantages of the invention will become apparent in a non-limiting manner upon reading the description of some of its embodiments.

The invention will also be better understood by referring to the drawings, in which:
- Figure 1 illustrates a cryptographic device according to an embodiment of the invention;
- Figure 2 illustrates the architecture of a cryptographic device according to an embodiment of the invention;
- Figure 3 illustrates a simplified method according to an embodiment of the invention;
- Figure 4 illustrates a shuffling according to an embodiment of the invention.

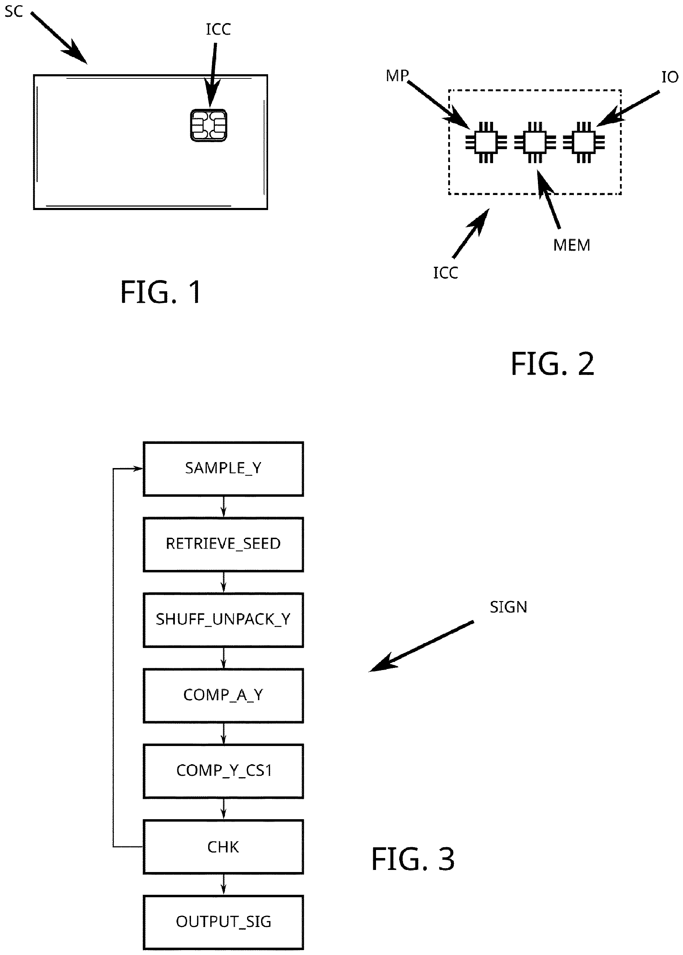

Figure 1 shows an electronic chip ICC according to one embodiment of the invention, embedded in a cryptographic device (a smartcard SC). The electronic chip is for example a microcontroller with a dedicated cryptoprocessor. Alternatively, it is a generic microcontroller.

Figure 2 shows an architecture of an electronic chip ICC of the smartcard SC according to Figure 1. The ICC chip includes a microprocessor MP, a memory MEM, and an input-output adapter IO. These different components are schematically represented as discrete components fixed on a PCB (not shown) and connected to each other by a bus (not shown). But these different components can be (and are in practice, in the case of smartcards) integrated on the same chip, cut from the same wafer, and inserted in a smartcard module. The memory MEM may be for example Flash or EEPROM. The memory MEM may store a computer program which, when executed by the electronic chip, causes a microprocessor of the electronic chip to carry out a method according to the invention.

Figure 3 depicts a method according to an embodiment of the invention, in which known steps are not detailed. To securely and quickly sign (with a series of 7 main steps, referred to as SIGN) a message with private key s₁, s₂:
1. At step SAMPLE_Y, sample (i.e. generate) y as a random vector of polynomials with uniform coefficients (y being represented by a string of bits);
2. At step RETRIEVE_SEED, recover parameter *ρ'* used as a seed to generate sample y (see lines 12 and 14 of Figure 4, page 13 of Dilithium specification, discussed above);
3. At step SHUFF_UNPACK_Y, unpack y as a random vector of polynomials with uniform coefficients by shuffling the string of bits to avoid side channel attacks, and by using the seed *ρ'* (thereby accelerating the procedure as compared to generating a new random number) to configure the shuffling;
4. At step COMP_A_Y, compute c = H(message, A y) where H is a hash function and A is part of the public key;
5. At step COMP_Y_CS1 , compute z = y + c s₁;
6. At step CHK, check if z has coefficients in a small interval, and if this is the case go back to step SAMPLE_Y (rejection sampling);
7. Otherwise, at step OUTPUT_SIG, return the signature σ = (z, c).

Figure 4 depicts a shuffling according to an embodiment of the invention in which STR_b denotes a string of bits representing vector y. As can be seen from the figure, the string of bits is a contiguous series of 18432 bits i.e. 2304 bytes, corresponding to the total number of coefficients (4*256 since there are 4 polynomials with 256 coefficients each), multiplied by 18 (each coefficient requiring 18 bits in the example considered). The first bit is denoted b₁, the 8^{th} is denoted b₈, the 9^{th} b₉, and so on. Similarly, the first byte is denoted B₁ (and corresponds to bits b₁b₂b₃b₄b₅b₆b₇b₈), the second byte is denoted B₂ (and corresponds to bits b₉b₁₀b₁₁b₁₂b₁₃b₁₄b₁₅b₁₆), the third one B₃ (i.e. bits b₁₇b₁₈b₁₉b₂₀b₂₁b₂₂b₂₃b₂₄) and so on. Odd bytes (1^{st}, 3^{rd}, 5^{th}, 7^{th} etc.) are grayed out while even bytes (2^{nd}, 4^{th}, 6^{th} etc.) remain white, so that the succession of bytes is more visible.

Each bit of each byte is represented by a little box (with dotted lines around) with a digit inside. The digit does not represent the value of the bit but its position in the byte (1 for 1^{st} position, 2 for 2^{nd} position, and up to 8 for 8^{th} position).

The aim of the shuffling is to reconstruct a usable representation of the polynomials y₁, y₂, y₃ and y₄, and to do so in a random order to prevent an attacker from spying and finding relevant information in the process. The coefficients of polynomial y₁ are denoted y_{1,1}, y_{1,2}, y_{1,3}, ... y_{1,256}. Similarly, the coefficients of polynomial y₂ are denoted y_{2,1}, y_{2,2}, y_{2,3}, ... y_{2,256}, the coefficients of polynomial y₃ are denoted y_{3,1}, y_{3,2}, y_{3,3}, ... y_{3,256}, and the coefficients of polynomial y₄ are denoted y_{4,1}, y_{4,2}, y_{4,3}, ... y_{4,256}.

Odd coefficients (y_{1,1}, y_{1,3}, y_{2,1}, y_{2,3}, y_{3,1}, y_{3,3}, y_{4,1}, y_{4,3}) of the polynomials are grayed out while even coefficients (y_{1,2}, y_{1,256}, y_{2,2}, y_{2,256}, y_{3,2}, y_{3,256}, y_{4,2}, y_{4,256}) remain white, so that the succession of coefficients is more visible. The bits of the coefficients of the polynomials are numbered from 1 to 18, however since there is no room for two digits, numbers from 10 to 18 have been replaced by digits 0 to 8, printed in italics and upside down to distinguish them.

Each bit of each coefficient is represented by a little box (with dotted lines around) with a digit inside. The digit does not represent the value of the bit but its position in the coefficient (1 for 1^{st} position, 2 for 2^{nd} position, etc., being reminded that upside down digits 0 to 8 represent bits number 10 to number 18).

In the illustrated shuffling, bits b₁ to b₁₈ are randomly affected to a coefficient (in this example, to coefficient y_{1,2}) of a polynomial (in this example, polynomial y₁). This means that, based on the random number used for the purpose of randomly affecting bits to coefficients in the example of Figure 4, the value of the 1^{st} bit of coefficient y_{1,2} is equal to the value of b₁, the value of the 2^{nd} bit of coefficient y_{1,2} is equal to the value of b₂, and so on up to the value of the 18^{th} bit of coefficient y_{1,2} which is equal to the value of b₁₈. Similarly, in this example bits b₁₉ to b₃₆ are randomly affected to a coefficient (in this example to coefficient y_{4,2}) of a polynomial (here y₄), bits b₃₇ to b₅₄ are randomly affected to a coefficient (here y_{1,3}) of a polynomial (here y₁), and bits b₅₅ to b₇₂ are randomly affected to a coefficient (here y_{2,256}) of a polynomial (here y₂). Of course, this is only an example and a shuffling according to the present description could, in another embodiment, pick any 18 bits from the string of bits (not even necessarily 18 contiguous bits) for any 18-bit coefficient of any polynomial.

As can be seen from Figure 4, the unpacking requires extracting bits from at least 3 different bytes from the string of bits STR_b in order to reconstitute 18-bit coefficients. For example, in the example of Figure 4, it is necessary to extract the last 6 bits of byte B3, the entire 8 bits of byte B4, and the first 4 bits of byte B5, in order to form coefficient y_{4,2}. It would be very inconvenient, each time a given coefficient needs to be used in a calculation, to have to determine which bits of which bytes of the string of bits STR_b to extract and concatenate in order to reconstruct such coefficient, and then to proceed with such reconstruction, before moving on with the desired calculation. Hence the preliminary unpacking.

Unpacking is also often useful due to the fact that the string of bits STR_b is at least as compact and typically more compact than the unpacked vector. While the coefficients of each polynomial have been represented on Figure 4 as if they were contiguous, this is not necessarily true. There is no such thing as an 18-bit register in conventional processors. And there is typically no way to address memory by blocks of 18 bits. So, in practice, for example in a 64-bit architecture (which is the prevalent architecture for current personal computers in particular), each coefficient could be stored on 64 bits (only 18 of which would be useful), because it's much faster and simpler to handle it this way. However, for permanent storage purpose (or for transmission over a network) it is best to not consume non-volatile memory uselessly (or to waste telecom bandwidth) and to use a compact representation (the string of bits STR_b). This is another justification for the unpacking.

It should be noted that, in the randomized mode of Dilithium, the shuffling of the unpacking can be viewed, substantially, as an implementation aspect (i.e. as not affecting the outcome of the Dilithium operation). Considering the example of Figure 4, this may seem counterintuitive. Indeed, Figure 4 shows that the order of the coefficients in y is not the same as it would have been without the shuffling. However, while it is correct to say that the shuffling shown on Figure 4 is equivalent to having generated the random numbers used to build the coefficients in a different order, this is immaterial from a Dilithium computation standpoint (what matters is that a random source be used, but the actual values of the random numbers is not important so long as they are random). The order in which random numbers are picked from a pool of random numbers to be affected to given coefficients of vector y (i.e. the initialization of vector y coefficients) does not change the nature of the Dilithium operation. In the end all coefficients are deemed random anyway. The point of the shuffling is to make sure that while unpacking takes place, no useful information may be retrieved by spying (and here, the order of the coefficients obviously matters).

In the deterministic mode of Dilithium, if the shuffling of Figure 4 is included, it can be detected. It is therefore not formally a mere implementation aspect, as it affects the outcome of the computation in a visible manner.

According to the invention, a possible shuffling (which is variant of the one shown on Figure 4) is provided that can be formally classified as a pure implementation aspect. Such shuffling keeps the exact order of the random numbers generated for vector y coefficients. The shuffling takes place at a time level, as opposed to a space level. In other words, the coefficients are kept ("geographically") in their original position (which is unchanged). For example, bits 1 to 18 of the string of bits STR_b may always correspond to coefficient y_{1,1} of polynomial y₁, bits 19 to 36 of the string of bits STR_b may always correspond to coefficient y_{1,2} of polynomial y₁, and so on. However, coefficients are processed in a random fashion (timewise). That is to say that the shuffling randomly selects and extracts a certain coefficient from the string of bits (e.g. y_{3,27}) and copies it to the expected target (coefficient y_{3,27} storage), then randomly selects and extracts another coefficient from the string of bits (e.g. y_{4,93}) and copies it to the expected target (coefficient y_{4,93} storage) and continues until all coefficients have been extracted and copied. This alternative shuffling may be advantageous for deterministic Dilithium, for which not changing the order of the coefficients allows complying with NIST test vectors.

The potential non-compliance of the shuffling of Figure 4 (with NIST test vectors) is not an issue from a security standpoint but may require explanations and/or tweaks to reassure entities relying on NIST test vectors when assessing a particular Dilithium implementation.

Although at the present stage, there seems to be no practical difference between the security of the two shuffling methods above, the shuffling of Figure 4 may be more robust (from a theoretical perspective) than the variant. There is no difference so long as the random source used for generating the string of bits is robust in the first place. If at any time, however, some weaknesses were discovered in this random source, the shuffling of Figure 4 would add another layer of randomness by changing the order of the coefficients, which may render them more robust.

According to a first embodiment, a method is proposed to improve the security of a cryptographic device while minimizing the deceleration of the cryptographic device due to improving the security of the cryptographic device. Improving the security requires taking extra steps, i.e. reduced performance (in terms of speed). However, by reusing already available information, the method is able to limit the performance reduction, as will be seen below. The cryptographic device comprises at least one electronic chip (e.g. processor core, or set of processor cores) to carry out a Dilithium operation involving a vector y of polynomials yᵢ with coefficients y_{i,j}. According to a preferred embodiment, said Dilithium is a deterministic Dilithium (as opposed to a randomized Dilithium). The method comprises the cryptographic device generating the vector y from a random seed (at that stage, the vector is in the form of a bit string, i.e. the various parts of the vector are not easily accessible as access to these parts requires unpacking). The method comprises the cryptographic device unpacking the vector y from the bit string. However, this is not a standard unpacking (which would be weak, from a side channel attack standpoint). Instead, the method further comprises the cryptographic device reusing the random seed (that was used to generate y) to randomly shuffle the unpacking of vector y, thereby further securing the Dilithium operation while sparing a random number generation. The random seed is preferably the parameter *ρ'* of the Dilithium specification as illustrated in Figure 3 (and accompanying description). Instead of using *ρ'* (or more generally the seed) directly, it is also possible to use data generated from *ρ'* (or from any other appropriate seed) such as the string of bits of line 14 of the Dilithium specification pseudocode used to generate vector y (discussed above). For example, if 10 bits are needed for the seed, the first 10 bits of parameter *ρ'* (or of a string of bits generated from *ρ'*) can be used as a seed for the shuffling. From an attacker's standpoint, to ensure the correctness of the linear system (and for the attack to be effective), it is necessary to know which coefficients of which polynomial are null. However, by unpacking the coefficients in a random order at each execution, the invention prevents an attacker from building a correct linear system (since the attacker has no information about the execution order).

It is particularly advantageous to reuse a seed and therefore not require a new random number generation, especially in the case of a deterministic as opposed to randomized implementation. Indeed, the signature scheme then does not even require a random number generator for computing signatures (which does not mean that a deterministic Dilithium device is prevented from having a random number generator - this remains a possibility). Deterministic Dilithium still does require a random number generator for generating a key pair, but the key pair generation task can sometimes be handled by a different device. For example, key generation may be carried out in an HSM (hardware security module), i.e. some powerful piece of cryptographic equipment that can be kept in secure premises (it is like a server but with cryptographic acceleration and very high physical and logical security implemented). Generated key pairs can then be sent to devices that will be using them to authenticate or sign with the respective key pair in question. Such devices may be small tokens such as a personal security devices (cryptographic smart cards, USB security tokens, IoT devices with security requirements, etc.). Each key pair can be sent (e.g. from such HSM) to a respective device securely, e.g. in encrypted form, over a network, or the respective devices may be configured on secure premises (such as a secure factory where the keys could be loaded without any risk of being hacked) before being provided to the end users. A secure factory is one that puts in place access control to prevent unauthorized third parties onsite, and has processes in place to protect its activities from potential hackers.

In this case (absence of a random number generator in the device implementing the deterministic Dilithium according to the invention), there is not only an acceleration due to the absence of need to generate a random number (generating cryptographically secure random numbers is a complex and long task), but also an optimization if the random number generator can be dispensed with altogether (aside from not being used), leading to a smaller electronic chip, less power consumption, etc. It is noted that by absence of random number generator, it is to be understood that there is no cryptographically suitable random number generator. There can be, however, and there typically is, a pseudo random generator, such as a linear congruential generator. Such generators can quickly and easily generate sequences of numbers which, to a human, look like random. Such sequences have mathematical properties rendering them predictable by a properly configured machine and are not suitable for otherwise unprotected sensitive cryptographic operations.

The absence of actual generation of a random number in the context of the shuffling of the unpacking operation of vector y during a Dilithium operation is, alone, advantageous (i.e. even if a robust random number generator is present in the electronic chip and possibly used for other purposes). Hardware random number generators ("HRNG") usually generate a cryptographically secure random word in a few dozens of clock cycles while software cryptographically secure pseudorandom number generators ("CSPRNG") typically require hundreds to thousands of clock cycles to generate the same size of random word. For instance, the HRNG of the STM32F407 microcontroller guarantees a new 32-bit random word every 40 clock cycles while arc4random (a CSPRNG based on ChaCha20) requires around 600 clock cycles to generate a 32-bit random word. The latter is based on arc4random from OpenBSD 7.2, 53^{rd} release, October 20, 2022. The arc4random CSPRNG has been provided by OpenBSD for years but has evolved over time. It is part of a C library (stdlib) and is a secure alternative to the default rand function of this library (which is a weak but fast pseudorandom generator). HRNGs are not always available on a given device, but when they are not, a CSPRNG might be available (although they might be very slow). In addition, even HRNGs are sometimes much slower than stated above, and can even be blocked at times. For example, a HRNG may rely on outside inputs (such as mouse movements by a human user, or analysis of timing of keys pressed by a human user of a computer keyboard). This is common on personal computers, but less so in embedded devices. In such a case, when some software application requires a lot of random numbers, situations may arise where there is not enough input (e.g. the user didn't move the mouse enough or didn't press enough keyboard keys). In such a case the HRNG is suspended until more input is received. Until then, the whole processing is stalled. This kind of issues cannot happen with the invention, at least not for the unpacking step, since the unpacking relies on already available randomness.

Reusing random numbers in cryptographic algorithms is usually not recommended. In the context of this description though, the random seed is Dilithium randomness (i.e. random numbers affecting the output of the computation of a Dilithium operation) or derived from Dilithium randomness. According to the invention, the random seed can be reused in deterministic or randomized Dilithium, to carry out a shuffling, whether it is the shuffling of Figure 4 or an alternative shuffling serving mere implementation purposes (as in the alternative detailed in the description of Figure 4). Serving implementation purposes is to be understood as meaning that Dilithium randomness is reused to affect the manner in which the Dilithium computation is carried out (as opposed to its outcome). Such reuse has been assessed to be sound when applied to the shuffling countermeasure (including the one of Figure 4). It is noted that for a Dilithium signature, the random seed changes at each signature operation and is deemed unpredictable by an attacker having no information about the private key.

According to a second embodiment, the Dilithium operation of the method of the first embodiment comprises computing a Dilithium digital signature of the form z = y + c s₁. However, other operations can also be protected by the invention, for example the computation of A y may be carried out by shuffling the unpacking of y, similar to what has been described for the computation of z = y + c s₁.

According to a third embodiment, the method of the first or second embodiment comprises the cryptographic device reusing the random seed to randomly shuffle the unpacking of the vector y by changing the order in which the polynomials yᵢ within the vector y are processed. Accordingly, the method may start from a polynomial (selected randomly) other than y₁, and the next one, up to the fourth polynomial (when there are four polynomials), is each time chosen randomly. It is best to not only change the order of the polynomials but to shuffle as much as possible. This, however, requires more processing.

According to a fourth embodiment, the method according to any of the first to third embodiments comprises the cryptographic device reusing the random seed to randomly shuffle the unpacking of the vector y by changing the order in which polynomials coefficients y_{i,j} within each polynomial yᵢ of the vector y are processed. Accordingly, the order of the coefficients of a given polynomial is not the default order such as y_{1,1}, y_{1,2}, y_{1,3}, etc. but a random order. It is best to not only change the order of the coefficients but to shuffle as much as possible. This, however, requires more processing. One preferred embodiment consists in combining the third and fourth embodiments to shuffle not only the polynomials but also their coefficients.

According to a fifth embodiment, the method according to any of the first to fourth embodiments comprises securing at least one other Dilithium operation by using different parts of the random seed (or, alternatively different parts of data derived from the random seed) for each Dilithium operation. For example, the method may secure on the one hand the computation of A y, on the other hand the computation of z = y + c s₁, and may unpack y twice, once for the first operation and another time for the second operation, in which case it is advantageous to use a different shuffling each time. This can be achieved by using different parts of the random seed. For example, the random seed *ρ'* illustrated in line 12 of Figure 4, page 13 of Dilithium specification (discussed above) is a 384-bit seed, while as little as 10 bits may be enough for some shuffling.

It might seem odd, at first, to unpack the vector y twice instead of merely unpacking it once for all and using it several times if needed. However, certain devices (certain IoT devices, certain smart cards, certain resource constrained tokens) have so little memory that they cannot maintain the unpacked vector y in memory while carrying out other tasks which require some memory too. In such instances, in which several unpacking operations are needed, it is advantageous to protect them as stated above in order to avoid facilitating an attack that would have been based on a same shuffling being carried out twice (enabling possibly relevant comparisons, statistics etc.).

According to a sixth embodiment, the method according to any of the first to fifth embodiments comprises the cryptographic device shuffling ordered elements identified by an index i (to be understood as: at least one index), by replacing the index i (or indexes) by another index j (or indexes), where the other index j (or indexes) is equal to the "exclusive or" of the index i (or indexes) with information derived from the random seed. The information derived should have the same number of bits as the index(es). The information derived may be all of the random seed if the index has the same size as the random seed, part of the random seed it if it is shorter, or, alternatively, information computed from the random seed. This is advantageous compared to a solution which would rely for example on the Fisher-Yates technique. The latter has a significant impact on performance since it requires as many random numbers as there are operations to shuffle (let's refer to this number as n), and many memory accesses (4 n loads and 2 n stores). That said, Fisher-Yates might be advantageous at times, because it is able to generate a greater number of permutations (and is therefore harder to predict by an attacker). According to an alternative embodiment of the invention, when an existing source of randomness has provided enough reusable random data beforehand, without having to generate any further randomness for Fischer-Yates to operate, Fischer-Yates is used.

The sixth embodiment works when n is a power of 2 (the Fischer-Yates alternative does not have this constraint). More specifically, the part of the random seed to be XORed with the index must have the same number of bits as the number of bits required to encode the index. Under this condition, the shuffling is extremely fast and requires little resources. However, such shuffling only permits n permutations out of n! (i.e. n*(n-1)*(n-2)*... *3*2 possible permutations), which is arguably less secure (less unpredictable).

For example, let's consider a string of bits of L × N × n bits, from which it is desired to unpack L polynomials yo ... y_{L-1} with N n-bit coefficients each. For Dilithium2, we may have L = 4, N = 256 and n = 18 (18 bits per coefficient). It is possible to arbitrarily select log (4 × 256) = 10 bits of the string of bits as a parameter r (e.g. the first 10 bits of the string of bits), or to use 10 bits from the seed used to generate y. Then, the method may unpack coefficient y_{(i⊕r)/N,(i⊕r)%N}, where (i⊕r)/N designates the integer division of i XOR r by N, and (i⊕r)%N designates the remainder (modulo) of the integer division of i XOR r by N. There are 2¹⁰ = 1024 different possibilities for the order in which the coefficients are shuffled, without requiring a random number.

According to a seventh embodiment, the method according to any of the first to fifth embodiments comprises the cryptographic device shuffling ordered elements identified by an index i (to be understood as: at least one index), by replacing the index i (or indexes) by another index j (or indexes), where the other index j (or indexes) is equal to the i^{th} iteration of a linear congruential generator (LCG) initialized based on the random seed, i.e. with all or part of the random seed (or a number derived therefrom). An LCG is defined by Xₙ₊₁ = (a Xₙ + c) mod m where Xo refers to the initial state (can use a random seed for Xo as proposed here).

According to a first option, parameter m is set to be a power of 2, parameter a can be any obtained by picking a' ∈ [0, m/4 - 1] (which can be achieve by using the already discussed random seed *ρ'* of the Dilithium specification, e.g. by computing *ρ'*%(m/4), where % refers to the modulo operator) and computing a = 4a' + 1. Parameter c can be any odd number. This first option allows for m³/8 permutations.

According to a second option, c is chosen to be relatively prime to m, a such that 2 a - 1 is divisible by all prime factors of m and 3 a - 1 is divisible by 4 if m is divisible by 4.

According to an eighth embodiment, a cryptographic device comprises at least one electronic chip to carry out a Dilithium operation involving a vector y of polynomials yᵢ with coefficients y_{i,j}. The cryptographic device is arranged to generate the vector y from a random seed and to unpack the vector y from a bit string. The cryptographic device is further arranged to reuse the random seed to randomly shuffle the unpacking of the vector y, thereby further securing the Dilithium operation while sparing a random number generation. Remarks made with respect to the first embodiment equally apply to the eighth embodiment.

According to a ninth embodiment, the Dilithium operation of the cryptographic device of the eighth embodiment comprises computing a Dilithium digital signature of the form z = y + c s₁. Remarks made with respect to the second embodiment equally apply to the ninth embodiment.

According to a tenth embodiment, the cryptographic device according to the eighth or ninth embodiments is arranged to reuse the random seed to randomly shuffle the unpacking of the vector y by changing the order in which the polynomials yᵢ within the vector y are processed. Remarks made with respect to the third embodiment equally apply to the tenth embodiment.

According to an eleventh embodiment, the cryptographic device according to any of the eighth to tenth embodiments is arranged to reuse the random seed to randomly shuffle the unpacking of the vector y by changing the order in which polynomials coefficients y_{i,j} within each polynomial yᵢ of the vector y are processed. Remarks made with respect to the fourth embodiment equally apply to the eleventh embodiment.

According to a twelfth embodiment, the cryptographic device according to any of the eighth to eleventh embodiments is arranged to secure at least one other Dilithium operation by using different parts of the random seed for each Dilithium operation. Remarks made with respect to the fifth embodiment equally apply to the twelfth embodiment.

According to a thirteenth embodiment, the cryptographic device according to any of the eighth to twelfth embodiments is arranged to shuffle ordered elements identified by an index i, by replacing the index i by another index j, where the other index j is equal to the exclusive or of the index i with information derived from the random seed. Remarks made with respect to the sixth embodiment equally apply to the thirteenth embodiment.

According to a fourteenth embodiment, the cryptographic device according to any of the eighth to twelfth embodiments is arranged to shuffle ordered elements identified by an index i, by replacing the index i by another index j, where the other index j is equal to the i^{th} iteration of a linear congruential generator initialized based on the random seed. Remarks made with respect to the seventh embodiment equally apply to the fourteenth embodiment.

According to a fifteenth embodiment, a computer program comprises a sequence of instructions implementing the steps of the method according to one of the first to seventh embodiments when executed by a processor. This program is written, for example, in assembly language, or in C language. Such low-level languages are advantageous in that they allow fine optimization and allow countermeasures to be implemented more efficiently. Higher level languages may be possible but generally degrade performance and do not necessarily allow for efficient countermeasures.

According to a sixteenth embodiment, a non-transitory computer-readable storage medium comprises a computer program according to the fifteenth embodiment. This storage medium is, for example, a memory allowing permanent storage. The memory may be rewritable (Flash, EEPROM, battery protected RAM, or even magnetic or optical media) or non-rewritable (ROM, etc.). Such a storage medium can be integrated into a smartcard, USB key, or any computer, such as a smartphone.

The invention is not limited to the embodiments described above as mere examples. It extends to other variants. For example, while certain illustrations have been provided for Dilithium2 (and associated 18-bit coefficients for polynomials), the invention operates just as well with other versions such as Dilithium3/5 (and associated 20-bit coefficients for polynomials) which can be preferred for security reasons (more robust due to larger sizes).

The electronic chip (or chips) contemplated may each be any suitable electronic circuit, for example a dedicated electronic circuit (which may comprise hardwired logic to carry out the claimed methods without the need for a processor and possibly at a higher speed), an FPGA, an ASIC, a microcontroller, a DSP, or a circuit comprising a processor and a memory, the memory storing a suitable computer program. While the cryptographic device may be a smartcard, it could also be a TPM (trusted platform module) found on computer motherboards (often derived from smartcard technology, sometimes even a regular smartcard chip with extra features). The cryptographic device could also be a regular processor of a server, or of a personal computer or smartphone or IoT device, arranged to carry out cryptographic tasks, possibly combined with other circuits (such as a BIOS or UEFI electronic components, storing specific programs for the purpose of carrying out the claimed methods).

Usable memories are not limited to the examples given for illustrative purposes only, but cover any functionally equivalent type of memory.

The embodiments described in connection with the methods according to the invention can be transposed to cryptographic devices, as well as to computer programs and storage media according to the invention, and vice versa.

## Claims

1. A method to improve the security of a cryptographic device (SC) while minimizing the deceleration of the cryptographic device due to improving the security of the cryptographic device, the cryptographic device comprising at least one electronic chip (ICC) to carry out a Dilithium operation involving a vector y of polynomials yᵢ (y₁, y₂, y₃, y₄) with coefficients y_{i,j} (y_{1,1}, y_{1,2}, ... y_{1,256}, ... y_{4,256}), wherein the method comprises the cryptographic device generating the vector y from a random seed and unpacking the vector y from a bit string, wherein the method further comprises the cryptographic device reusing the random seed to randomly shuffle the unpacking of the vector y, thereby further securing the Dilithium operation while sparing a random number generation.

2. The method of claim 1, wherein the Dilithium operation comprises computing a Dilithium digital signature of the form z = y + c s₁.

3. The method of claim 1 or 2, comprising the cryptographic device reusing the random seed to randomly shuffle the unpacking of the vector y by changing the order in which the polynomials yᵢ within the vector y are processed.

4. The method according to any previous claim, comprising the cryptographic device reusing the random seed to randomly shuffle the unpacking of the vector y by changing the order in which polynomials coefficients y_{i,j} within each polynomial yᵢ of the vector y are processed.

5. The method according to any previous claim, comprising securing at least one other Dilithium operation by using different parts of the random seed for each Dilithium operation.

6. The method according to any previous claim, comprising the cryptographic device shuffling ordered elements identified by an index i, by replacing the index i by another index j, where the other index j is equal to the exclusive or of the index i with information derived from the random seed.

7. The method according to any of claims 1 to 5, comprising the cryptographic device shuffling ordered elements identified by an index i, by replacing the index i by another index j, where the other index j is equal to the i^{th} iteration of a linear congruential generator initialized based on the random seed.

8. A cryptographic device (SC) comprising at least one electronic chip (ICC) to carry out a Dilithium operation involving a vector y of polynomials yᵢ (y₁, y₂, y₃, y₄) with coefficients y_{i,j} (y_{1,1}, y_{1,2}, ... y_{1,256}, ... y_{4,256}), the cryptographic device being arranged to generate the vector y from a random seed and to unpack the vector y from a bit string, wherein the cryptographic device is further arranged to reuse the random seed to randomly shuffle the unpacking of the vector y, thereby further securing the Dilithium operation while sparing a random number generation.

9. The cryptographic device of claim 8, wherein the Dilithium operation comprises computing a Dilithium digital signature of the form z = y + c s₁.

10. The cryptographic device of claim 8 or 9, wherein the cryptographic device is arranged to reuse the random seed to randomly shuffle the unpacking of the vector y by changing the order in which the polynomials yᵢ within the vector y are processed.

11. The cryptographic device of any of claims 8 to 10, wherein the cryptographic device is arranged to reuse the random seed to randomly shuffle the unpacking of the vector y by changing the order in which polynomials coefficients y_{i,j} within each polynomial yᵢ of the vector y are processed.

12. The cryptographic device of any of claims 8 to 11, wherein the cryptographic device is arranged to secure at least one other Dilithium operation by using different parts of the random seed for each Dilithium operation.

13. The cryptographic device of any of claims 8 to 12, wherein the cryptographic device is arranged to shuffle ordered elements identified by an index i, by replacing the index i by another index j, where the other index j is equal to the exclusive or of the index i with information derived from the random seed.

14. The cryptographic device of any of claims 8 to 12, wherein the cryptographic device is arranged to shuffle ordered elements identified by an index i, by replacing the index i by another index j, where the other index j is equal to the i^{th} iteration of a linear congruential generator initialized based on the random seed.

15. A computer program comprising a sequence of instructions implementing the steps of the method of any of claims 1 to 7 when executed by a processor.

16. A non-transitory computer-readable storage medium comprising a computer program according to claim 15.
